# FASCICULE DE BREVET EUROPEEN

(11) **EP 1 177 229 B1**
(45) Date de publication et mention de la délivrance du brevet: **20.04.2005**
(21) Numéro de dépôt: 00927056.2
(22) Date de dépôt: 25.04.2000
(51) Int. Cl.: C08F 255/02, C08F 255/00, C08F 8/44, C08F 8/46

(54) **POLYOLEFINES ET PROCEDE POUR LEUR FABRICATION**
POLYOLEFIN UND DIE HERSTELLUNG DAVON
POLYOLEFINS AND METHOD FOR THE PRODUCTION THEREOF

(30) Priorité: 29.04.1999 BE 9900309
(43) Date de publication de la demande: 06.02.2002
(73) Titulaire: SOLVAY (Société Anonyme), 1050 Bruxelles (BE)
(72) Inventeur: GAUTHY, Fernand, B-1780 Wemmel (BE)
(74) Mandataire: Jacques, Philippe
(86) Numéro de dépôt international: PCT/EP2000/003733
(87) Numéro de publication internationale: WO 2000/066641

(56) Documents cités:
- EP-A- 0 202 921
- EP-A- 0 370 736
- EP-A- 0 659 784
- EP-A- 0 849 318
- EP-A- 0 939 089
- WO-A-94/15981
- US-A- 4 668 721
- US-A- 5 698 637

## Description

La présente invention concerne un procédé de préparation de polyoléfines présentant des propriétés rhéologiques et de compatibilisation particulières, ainsi que les polyoléfines résultantes et leur utilisation.

Les problèmes que posent les polymères en général, et les polyoléfines en particulier, concernent leur tenue en fondu insuffisante lors de leur mise en oeuvre par extrusion.

Il est bien connu que la tenue en fondu du polyéthylène (PE) et du polypropylène (PP), définie par une viscosité élongationnelle élevée, est insuffisante pour certains types de mise en oeuvre, tels que l'extrusion moussage, l'extrusion soufflage, le thermoformage et le soufflage, en particulier le soufflage

### 3D.

Des solutions proposées pour résoudre ce problème consistent à ramifier la structure macromoléculaire du PE ou du PP en créant des liaisons covalentes entre les macromolécules. Mais en pratique, les résines ramifiées fabriquées par couplage covalent souffrent toutes d'une tendance à la dégradation des ramifications sous l'influence du cisaillement inhérent à la mise en oeuvre. D'autre part, une ramification covalente irréversible importante entraîne des ruptures d'écoulement limitant la productivité et/ou la qualité du produit fini.

Pour pouvoir augmenter la densité de connexion entre macromolécules sans être limité par la réticulation, il est possible d'apporter une part substantielle des ramifications via des liaisons ioniques réversibles. Ceci permet d'augmenter la tenue en fondu tout en conservant le caractère thermoplastique.

EP 0 370 736 décrit un procédé pour améliorer les propriétés adhésives du polypropylène greffé dans lequel le monomère résiduel est éliminé par mise en contact du polymère greffé avec une solution aqueuse d'un matériau alcalin, de préférence l'hydroxide de sodium.

Le procédé révélé dans le brevet EP 0 086 159 propose la réticulation de polymères et de copolymères d'α-oléfines pour en améliorer les caractéristiques de résistance mécanique à chaud. Le greffage d'un acide carboxylique en présence d'un générateur de radicaux et la salification subséquente par des composés métalliques sont envisagés.

L'objectif de la présente invention est de proposer un procédé pour la préparation de polyoléfines présentant des propriétés améliorées en ce qui concerne notamment la tenue en fondu.

La présente invention concerne par conséquent un procédé de préparation de polyoléfines comprenant les étapes de
a) greffage de groupes acides sur des polyoléfines au moyen d'un monomère greffable porteur d'au moins un groupe fonctionnel choisi parmi un carbonyle et un anhydride d'acide, éventuellement en présence d'un autre monomère greffable porteur d'une insaturation vinylique et éventuellement d'un ou de plusieurs noyaux aromatiques,
b) épuration consistant à éliminer au moins une partie du monomère greffable porteur d'au moins un groupe fonctionnel choisi parmi un carbonyle et un anhydride d'acide, n'ayant pas réagi avec les polyoléfines
c) neutralisation des groupes acides par au moins un agent neutralisant.

Les polymères obtenus par le procédé conforme à la présente invention présentent des propriétés améliorées, notamment en ce qui concerne la tenue en fondu, grâce à l'introduction d'une étape supplémentaire d'épuration b). En effet, dans le cas des procédés de l'état de la technique, il subsiste dans le produit final toujours une partie plus ou moins importante de monomères greffables fonctionnels qui n'ont pas réagi pas avec les polyoléfines. La présence de ces monomères greffables fonctionnels qui n'ont pas réagi avec les polyoléfines c'est-à-dire qui n'ont pas été greffés sur les polyoléfines après l'étape a) peut être responsable entre autres d'une tenue en fondu insuffisante et de problèmes de coloration. Cette étape d'épuration b) a par conséquent comme objectif d'éliminer au moins une partie des monomères greffables fonctionnels n'ayant pas réagi avec les polyoléfines.

Une forme de réalisation avantageuse de la présente invention prévoit que l'étape d'épuration b) est effectuée par une des méthodes courantes et connues, de préférence par entraînement à l'acétone, par stripping à l'air chaud, par stripping à la vapeur d'eau, par stripping avec un gaz inerte ou par dégazage.

Le greffage des fonctions acides s'effectue, par exemple par voie radicalaire, sur des polyoléfines.

Les polyoléfines utilisables dans le procédé selon l'invention sont des polymères d'oléfines linéaires contenant de 2 à 8 atomes de carbone telles que l'éthylène, le propylène, le 1-butène, le 1-pentène, le 1-hexène et le 1-octène. Les oléfines linéaires contiennent de préférence de 2 à 6 atomes de carbone, plus particulièrement de 2 à 4 atomes de carbone.

Les polyoléfines peuvent être sélectionnées parmi les homopolymères des oléfines précitées et parmi les copolymères de ces oléfines, en particulier des copolymères d'éthylène ou de propylène avec un ou plusieurs comonomères. Les comonomères sont avantageusement choisis parmi les oléfines décrites ci-dessus, parmi les dioléfines comprenant de 4 à 18 atomes de carbone, telles que le 4-vinylcyclohexène, le dicyclopentadiène, le méthylène- et l'éthylidène-norbornène, le 1,3-butadiène, l'isoprène et le 1,3-pentadiène.

De préférence, les polyoléfines sont choisies parmi les polymères du propylène et les polymères de l'éthylène. De manière tout particulièrement préférée, les polyoléfines sont choisies parmi l'homopolymère de l'éthylène, l'homopolymère du propylène, les copolymères de l'éthylène, les copolymères du propylène, les copolymères d'éthylène et de propylène et leurs mélanges.

Les polymères du propylène sont le plus souvent choisis parmi les homopolymères et les copolymères du propylène dont l'indice de fluidité (MFI), mesuré à 230 °C, sous une charge de 2,16 kg selon la norme ASTM D 1238 (1986) est compris entre 0,1 et 2000 dg/min, de préférence entre 0,1 et 500 dg/min, de manière particulièrement préférée entre 0,1 et 50 dg/min.

Les polymères de l'éthylène sont le plus souvent choisis parmi les homopolymères et les copolymères de l'éthylène présentant une masse volumique standard comprise entre 860 et 996 kg/m³, de préférence entre 915 et 960 kg/m³, de manière particulièrement préférée entre 936 et 953 kg/m³ et un indice de fluidité (mesuré à 190 °C sous une charge de 5 kg selon la norme ISO 1133 (1991)) compris entre 0,01 et 2000 dg/min, de préférence entre 0,1 et 200 dg/min, de manière particulièrement préférée entre 1 et 40 dg/min.

Les polymères du propylène sont tout particulièrement préférés.

Le monomère greffable porteur d'au moins un groupe fonctionnel choisi parmi un carbonyle et un anhydride d'acide peut être choisi par exemple parmi les acides insaturés mono- ou dicarboxyliques et leurs dérivés et les anhydrides insaturés d'acide mono- ou dicarboxyliques et leurs dérivés. Le monomère greffable comprend de préférence de 3 à 20 atomes de carbones. On peut citer comme exemples typiques l'acide acrylique, l'acide méthacrylique, l'acide maléique, l'acide fumarique, l'acide itaconique, l'acide crotonique, l'acide citraconique, l'anhydride maléique, l'anhydride itaconique, l'anhydride crotonique et l'anhydride citraconique. L'anhydride maléique est tout particulièrement préféré.

La quantité de monomère greffable porteur d'au moins un groupe fonctionnel choisi parmi un carbonyle et un anhydride d'acide, mise en oeuvre pour le greffage, dépend entre autres des propriétés qu'on vise à obtenir pour le produit, de la quantité de générateur de radicaux mise en oeuvre et donc du rendement de greffage et taux de greffage souhaité, de même que du temps de réaction. Elle est en général suffisante pour permettre une amélioration des propriétés du produit fini et se situera généralement entre 0,01 à 10 % en poids, préférentiellement entre 0,1 et 5 % en poids par rapport aux polyoléfines.

Le monomère greffable porteur d'une insaturation vinylique et éventuellement d'un ou de plusieurs noyaux aromatiques comprend de préférence de 3 à 20 atomes de carbone. On peut citer comme exemples typiques le 1-dodécéne, le styrène, la vinylpyridine, le divinylbenzène, le 1,4-hexadiène et leurs mélanges. On préfère tout particulièrement le styrène.

L'utilisation de ce monomère greffable porteur d'une insaturation vinylique et éventuellement d'un ou de plusieurs noyaux aromatiques permet dans certains cas notamment d'augmenter le taux de greffage des polyoléfines.

Dans les cas où le monomère greffable porteur d'une insaturation vinylique et éventuellement d'un de plusieurs noyaux aromatiques est utilisé, la proportion nécessaire de ce monomère dépend des propriétés visées et vaut en général 0,01 à 10 % en poids, de préférence 0,1 à 5 % en poids, par rapport aux polyoléfines.

Une forme particulièrement préférée du procédé de la présente invention prévoit que celui-ci est effectué en absence de monomère greffable porteur d'une insaturation vinylique et éventuellement d'un ou plusieurs noyaux aromatiques.

Un autre mode de réalisation de la présente invention a donc comme objet un procédé dans lequel le greffage de groupes acides est réalisé en présence d'un générateur de radicaux.

A titre de générateur de radicaux, on utilise de préférence un peroxyde organique, et plus particulièrement un alkylperoxyde. Parmi ceux-ci, on peut citer le peroxyde de t-butylcumyle, le 1,3-di(2-t-butylperoxyisopropyl)benzène, le 2,5-diméthyl-2,5-di(t-butylperoxy)hexane, le di(t-butyl)peroxyde et le 2,5-diméthyl-2,5-di(t-butylperoxy)-3-hexyne. Le 2,5-diméthyl-2,5-di-t-butylperoxyhexane (DHBP) est particulièrement préféré.

Le générateur de radicaux est en général mis en oeuvre dans le procédé selon l'invention en une quantité suffisante pour permettre d'effectuer le greffage. Par ailleurs, il est souhaitable que la quantité ne dépasse pas la quantité minimale nécessaire car tout excès de générateur de radicaux peut entraîner une dégradation de la polyoléfine. La quantité est habituellement au moins égale à 0,0005 % en poids par rapport aux polyoléfines, elle est en particulier au moins égale à 0,001 % en poids, les valeurs d'au moins 0,005 % en poids étant les plus avantageuses. En général, la quantité ne dépasse pas 3 % en poids par rapport aux polyoléfines, de préférence pas 0,5 % en poids, les valeurs d'au plus 0,15 étant les plus recommandées.

L'étape de neutralisation des groupes acides est réalisée de préférence par au moins un agent neutralisant qui englobe une partie cationique comprenant un ou plusieurs cations choisis parmi le groupe constitué , des cations alcalino-terreux et des métaux de transition comme par exemple Zn²⁺, Al³⁺ et Zr⁴⁺. Parmi les cations alcalino-terreux, le Mg⁺⁺ est particulièrement préféré.

L'agent neutralisant englobe de préférence une partie anionique comprenant un ou plusieurs anions choisis parmi le groupe constitué des alcoolates, des carboxylates, des hydroxydes, des oxydes, des alkyles, des carbonates et des hydrogénocarbonates.

Des exemples d'agents neutralisants sont l'oxyde de calcium, l'éthoxyde de magnésium, l'acétate de zinc, le diéthylzinc, le butoxyde d'aluminium, le butoxyde de zirconium, et des composés semblables. L'acétate de zinc est particulièrement préféré.

La quantité d'agent neutralisant ajoutée dépend de l'utilisation prévue et donc des propriétés recherchées des polyoléfines. L'agent neutralisant est utilisé en une quantité de 10 % à 300 % de la valeur stoechiométrique par rapport aux groupes acides, de préférence en une quantité voisine de la stoechiométrie. Dans la pratique, la quantité d'agent neutralisant ajoutée se situera entre 0,1 et 1000 méq/kg de polyoléfine greffée de groupes acides, de préférence entre 1 et 450 méq/kg de polyoléfine greffée, de manière plus que préférée entre 5 et 300 méq/kg, de manière tout particulièrement préférée entre 10 et 100 méq/kg en fonction du taux de greffage de la polyoléfine.

Une amélioration supplémentaire des propriétés du produit fini peut être atteinte en faisant suivre l'étape c) d'une étape d'épuration d) consistant à éliminer les produits de la réaction de neutralisation des fonctions acides greffées. Cette étape d'épuration peut être effectuée par toutes les méthodes courantes et connues, de préférence par stripping à la vapeur d'eau, par stripping à l'air chaud ou par dégazage, de préférence par dégazage sous vide. Cette épuration est souvent indispensable car elle permet de déplacer l'équilibre de la réaction de neutralisation.

Pour effectuer le greffage des groupes acides et éventuellement les étapes suivantes, on peut utiliser tous les dispositifs connus à cet effet. Ainsi on peut travailler indifféremment avec des malaxeurs de type externe ou interne. Les malaxeurs de type interne sont les plus appropriés et parmi ceux-ci les malaxeurs discontinus BRABENDER® et les malaxeurs continus, tels que les extrudeuses. Une extrudeuse dans le sens de la présente invention comporte au moins les parties suivantes : une zone d'alimentation et à sa sortie une zone d'évacuation précédée d'une zone de compression, cette dernière forçant la masse fondue à passer au travers de la zone d'évacuation.

L'extrusion réactive est un procédé connu et pratiqué pour le greffage de groupes fonctionnels et par conséquent, dans une forme de réalisation préférée du procédé conforme à la présente invention, l'étape de greffage est réalisée dans une extrudeuse, technique généralement appelée "greffage par extrusion réactive" ou "extrusion réactive". De manière préférée, les étapes a) et c) du procédé sont réalisées dans une extrudeuse.

Une extrudeuse particulièrement préférée pour la réalisation du procédé selon l'invention est constituée d'un alliage résistant à la corrosion. Un alliage particulièrement préféré est un alliage constitué majoritairement de nickel ou de cobalt.

D'une manière particulièrement préférée, toutes les étapes sont réalisées selon un procédé en continu comportant une seule mise à fusion des polyoléfines et d'une manière plus que préférée toutes les étapes peuvent être réalisées en une seule extrusion dans une extrudeuse qui comporte en général, en plus des zones citées ci-dessus, facultativement, un ou plusieurs dispositifs d'alimentation en différé pour l'introduction séparée de la ou des polyoléfines, des monomères greffables porteurs d'au moins un groupe fonctionnel choisi parmi un carbonyle et un anhydride d'acide, du générateur de radicaux et/ou du stabilisant, un ou plusieurs éléments de vis permettant la propagation de la matière à extruder, une ou plusieurs zones d'échauffement permettant la fusion des constituants et, le cas échéant, une ou plusieurs zones de dégazage pour la ou les étapes d'épuration. Ces zones de dégazage doivent être isolées des zones d'injection de réactifs par un bouchon de matière fondue que l'on réalise généralement via des paires d'éléments de vis gauches par rapport au sens du transport. La zone d'évacuation peut en outre être suivie d'un dispositif de granulation ou d'un dispositif donnant à la matière extrudée une forme profilée, telle qu'un film, un tuyau, une feuille, etc., ou d'un dispositif donnant à la matière extrudée une forme profilée expansée par l'ajout d'un agent expanseur.

L'agent expanseur, utilisé aux fins de la présente invention, est choisi parmi les agents expanseurs habituellement utilisés pour générer des cellules dans les matières plastiques, tels que décrits dans l'ouvrage intitulé Encyclopedia of Polymer Science and Engineering, second edition, vol. 2, 1985, p. 434 - 446. L'agent expanseur peut être un agent expanseur du type chimique ou du type physique. De préférence, l'agent expanseur est du type physique comme par exemple les alcanes (butane, propane, isobutane, pentane), des hydrofluorocarbones, le dioxyde de carbone ou leurs mélanges.

Dans la pratique, un procédé particulièrement préféré, conforme à la présente invention, peut comprendre les étapes de
i) introduction et fusion de la (des) polyoléfine(s)
ii) introduction des monomères greffables porteurs d'au moins un groupe fonctionnel choisi parmi un carbonyle et un anhydride d'acide, du générateur de radicaux et éventuellement du monomère greffable porteur d'une insaturation vinylique et éventuellement d'un ou de plusieurs noyaux aromatiques,
iii) greffage des monomères greffables porteurs d'au moins un groupe fonctionnel choisi parmi un carbonyle et un anhydride d'acide
iv) élimination des monomères greffables porteurs d'au moins un groupe fonctionnel choisi parmi un carbonyle et un anhydride d'acide n'ayant pas réagi, en excès
v) introduction facultative d'un stabilisant
vi) introduction de l'agent neutralisant
vii) élimination de l'anion provenant de l'agent neutralisant, et
viii) granulation ou extrusion d'une forme profilée, éventuellement expansée.

La température du procédé est supérieure à la température de fusion et inférieure à la température de décomposition de la polyoléfine et de la polyoléfine greffée, le cas échéant si possible à une température optimale pour le générateur de radicaux. La température dépend dès lors de la nature des constituants du mélange réactionnel et sera en général d'au moins 100 °C, le plus souvent au moins 130 °C, en particulier au moins 140 °C. Généralement on travaille à une température ne dépassant pas 400 °C, le plus souvent pas 300 °C et plus particulièrement pas 250 °C.

La durée nécessaire pour effectuer les différentes étapes du procédé conforme à la présente invention, en l'occurrence le greffage et/ou l'épuration préalable, la neutralisation et/ou l'épuration finale dépend des quantités mises en oeuvre des réactifs, de la température, de la nature des réactifs engagés, du type de réacteur (par exemple de l'extrudeuse) utilisé. Elle est généralement de 1 seconde à 1 heure, de préférence de 5 secondes à 30 minutes, plus particulièrement de 10 secondes à 10 minutes.

Au cours du procédé, on peut incorporer à un moment quelconque un ou plusieurs additifs usuels des polyoléfines, tels que par exemple des agents stabilisants, des additifs anti-oxydants, des agents antistatiques, des colorants organiques ou minéraux et des matières de charge, etc. pour autant qu'ils n'interfèrent pas avec le greffage des groupes acides.

Dans une forme préférée du procédé selon l'invention, au moins un stabilisant est ajouté pendant le procédé.

De préférence, le stabilisant mis en oeuvre dans le procédé de la présente invention est choisi parmi les composés comprenant un groupement phénol stériquement encombré, parmi les composés phosphorés et parmi leurs mélanges. Il s'agit par exemple de substances, telles que le 1,3,5-triméthyl-2,4,6-tris(3,5-t-butyl-4-hydroxybenzyl)benzène, le pentaérythrityle tétrakis-(3,5-di-t-butyl-4-hydroxyphénylpropionate), le tris-(2,4-di-t-butylphényl)phosphite ou du mélange de pentaérythrityle tétrakis-(3,5-di-t-butyl-4-hydroxyphénylpropionate) et de tris(2,4-di-t-butylphényl)phosphite, de préférence en quantités égales. Le stabilisant préféré est le 1,3,5-triméthyl-2,4,6-tris(3,5-t-butyl-4-hydroxybenzyl)benzène.

L'invention concerne aussi les polyoléfines résultant du procédé selon l'invention.

L'invention concerne en outre des polyoléfines comportant des groupes acides partiellement neutralisés présentant un indice de fluidité en fondu de 0,001 à 1000 dg/min et une tenue en fondu améliorée caractérisée par une augmentation exponentielle de la viscosité élongationnelle et par une augmentation de la viscosité dynamique aux basses fréquences de cisaillement.

Les polyoléfines sont celles identifiées ci-dessus.

L'indice de fluidité en fondu des polyoléfines comportant des groupes acides partiellement neutralisés est habituellement de 0,001 à 1000 dg/min, de préférence entre 0,01 et 100 dg/min, de manière particulièrement préférée entre 0,1 et 50 dg/min, l'indice de fluidité étant mesuré à 230 °C sous un poids de 2,16 kg pour les polymères du propylène selon la norme ASTM D 1238 (1986) et à 190 °C sous un poids de 5 kg pour les polymères de l'éthylène selon la norme ISO 1133 (1991).

De préférence, les polyoléfines selon l'invention se caractérisent par des agrégats ioniques présentant une forme analogue à celle d'une grappe de raisins dont la taille est comprise entre 10 et 500 nm et dont les raisins ont une dimension inférieure à 50 nm.

Les grappes de raisins ont habituellement une taille supérieure à 10 nm, de préférence supérieure à 50 nm.

Les grappes de raisins ont habituellement une taille inférieure à 500 nm, de préférence inférieure à 200 nm.

Les raisins constituant la grappe ont habituellement une dimension inférieure à 50 nm, de préférence inférieure à 25 nm, de manière particulièrement préférée inférieure à 10 nm.

Les polyoléfines trouvent une application intéressante dans la préparation de mousses, notamment des mousses polypropylène et de mousses polyéthylène haute densité fabriquées par extrusion moussage. En particulier, les polyoléfines trouvent une application intéressante dans l'obtention d'objets façonnés par extrusion moussage, thermoformage ou soufflage, en particulier par soufflage 3D. Un autre domaine d'application est l'amélioration de l'adhésion dans les applications de compatibilisation, multicouches et de scellage.

L'invention porte également sur le procédé d'extrusion moussage selon lequel l'extrusion moussage est réalisée de manière consécutive au procédé de préparation des polyoléfines.

Par l'expression "de manière consécutive", on entend qu'il n'y a qu'une seule mise à fusion des polyoléfines pour le procédé de préparation des polyoléfines et le procédé d'extrusion moussage.

L'exemple suivant sert à illustrer la présente invention sans pour autant en limiter la portée.

### Exemple

La résine utilisée est un copolymère statistique de propylène et d'éthylène vendu sous la marque ELTEX® P KS 001 PF et elle est caractérisée par :
- un MFI (indice de fluidité en fondu mesuré selon la norme ASTM D 1238 (1986) à 230 °C sous une charge de 2,16 kg) de 4,5 dg/min,
- une température de fusion de 134 °C (mesurée par la technique DSC (Differential Scanning Calorimetry) selon la norme ISO FDIS 11357-3 (1999), au deuxième passage et avec une vitesse de balayage de 10 K/min) et
- une teneur en C2 total (mesurée par spectrométrie infrarouge) de 4,6 %.

Le débit d'alimentation de la résine dans l'extrudeuse est de 5 kg/h.

L'extrudeuse est une CLEXTRAL BC21 à doubles vis co-rotatives. Le diamètre des vis est de 25 mm et leur longueur est 1200 mm. La vitesse de rotation des vis est de 300 rpm (rotations par minute). Le fourreau est constitué de 12 éléments de fourreaux (zones) disposant chacun d'une régulation en température distincte.

Les 12 zones sont respectivement :
1. zone d'alimentation en résine via une trémie, le débit de résine est de 5 kg/h et la température de la zone de 80 °C
2. zone de compression avant fusion (température : 180 °C)
3. zone de malaxage pour la fusion (température : 200 °C)
4. zone d'injection de la solution d'anhydride maléique et du peroxyde dans l'acétone (température : 200 °C). La solution d'anhydride maléique dans l'acétone à une concentration de 187,5 g/litre est introduite avec un débit de 200 ml/h. La solution du peroxyde DHPP dans l'acétone, à une concentration de 30 g/litre, est introduite avec un débit de 100 ml/h. Cette zone est rendue relativement étanche en amont par un élément à contre-filet et en aval par un élément contre-filet rainuré. Ces contre-filets freinent l'avancement de la matière fondue et induisent un bouchon dynamique,
5. zone de dégazage des réactifs non convertis dans la zone 4 et de l'acétone (température : 240 °C)
6. zone d'injection de la solution de stabilisant 1,3,5-triméthyl-2,4,6-tris(3,5-t-butyl-4-hydroxybenzyl)benzène dans l'acétone à une concentration de 75 g/litre. La solution est introduite avec un débit de 200 ml/h. La température de la zone est 240 °C
7. zone complémentaire de dégazage des réactifs non convertis dans la zone 4 et de l'acétone (température : 240 °C)
8. zone d'injection de l'acétate de zinc en solution aqueuse à une concentration de 220 g d'acétate de zinc par litre de solution aqueuse. Le débit d'introduction est de 200 ml/h et la température de la zone est de 180 °C.
9. zone de dégazage pour l'élimination de l'eau et de l'acide acétique (température : 240 °C)
10. zone de mélange (température : 240 °C)
11. zone de dégazage complémentaire pour l'élimination de l'eau et de l'acide acétique (température : 240 °C)
12. zone de compression pour forcer la matière à travers la filière (température : 200 °C).

Après ces 12 zones fourreaux, une filière permet la transformation de la masse fondue en un jonc qui est refroidi et transformé en granules.

Le polymère final est caractérisé par un MFI de 7,4 dg/min. On le caractérise aussi par les techniques RME, ARES et microscopie électronique par transmission comme indiqué ci-dessous.

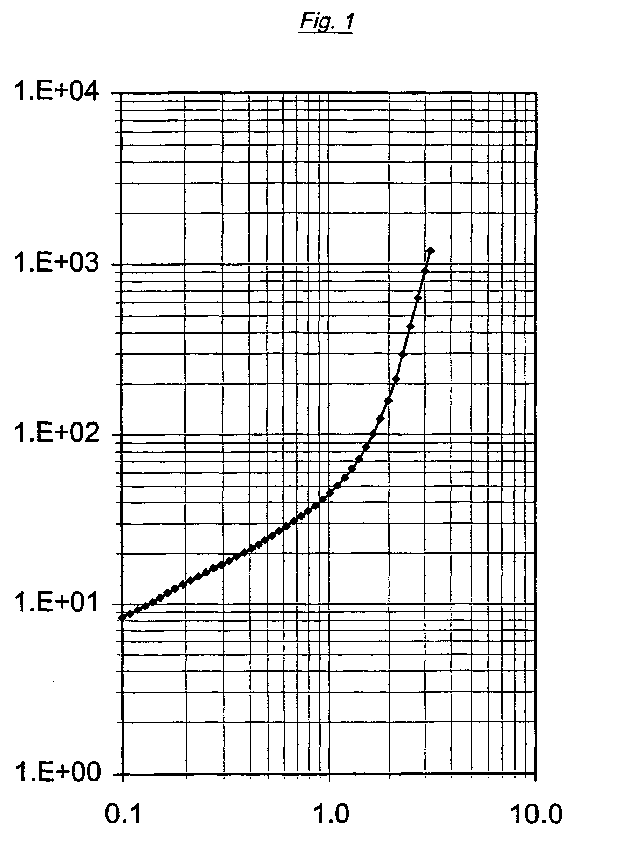

La viscosité élongationnelle du polymère considéré est déterminée au moyen d'un rhéomètre commercialisé par RHEOMETRICS sous la dénomination RME (RHEOMETRICS ELONGATIONAL RHEOMETER FOR MELTS). L'échantillon (55x9x2 mm) est obtenu par extrusion et est soumis à une procédure de relaxation avant les mesures. La courbe reprise à la Figure 1 (Diagramme RME) représente la variation, à 190 °C de la viscosité élongationnelle à l'état fondu (exprimée en kPa.s) en fonction du temps (exprimé en s) pour un gradient d'élongation (exprimé en s⁻¹) de 1.

Le polymère produit dans l'exemple présente une augmentation exponentielle de la viscosité élongationnelle en fonction du temps caractéristique d'un durcissement structural sous contrainte (tenue en fondu).

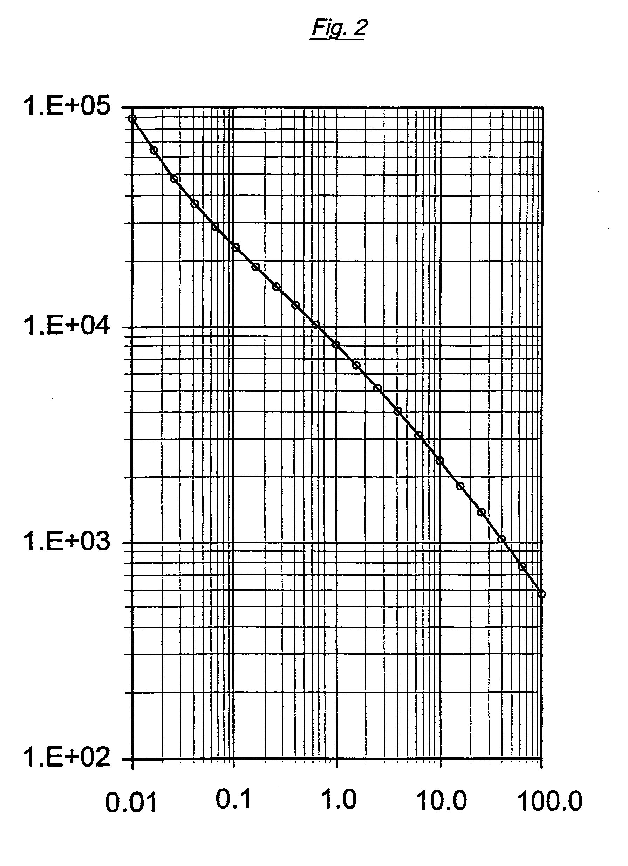

La viscosité dynamique, est déterminée au moyen d'un rhéogoniomètre à déformation imposée, commercialisé par RHEOMETRICS sous la dénomination ARES (ADVANCED RHEOLOGICAL EXPANSION SYSTEM). Les mesures sont réalisées sur l'échantillon, placé entre 2 plateaux parallèles et soumis à une déformation, d'un diamètre de 25 mm et d'une épaisseur de 2 mm coupé dans une plaque pressée. La courbe reprise à la Figure 2 (Diagramme ARES) représente la variation, à 170 °C, de la viscosité dynamique exprimée en Pa.s en fonction de la fréquence exprimée en rad/s.

Le polymère produit dans l'exemple se caractérise par une augmentation de la viscosité dynamique aux basses fréquences.

La microscopie électronique par transmission est réalisée au moyen d'un microscope ZEISS EM 910. L'examen a été effectué sur des coupes ultramicrotomiques d'environ 90 nm.

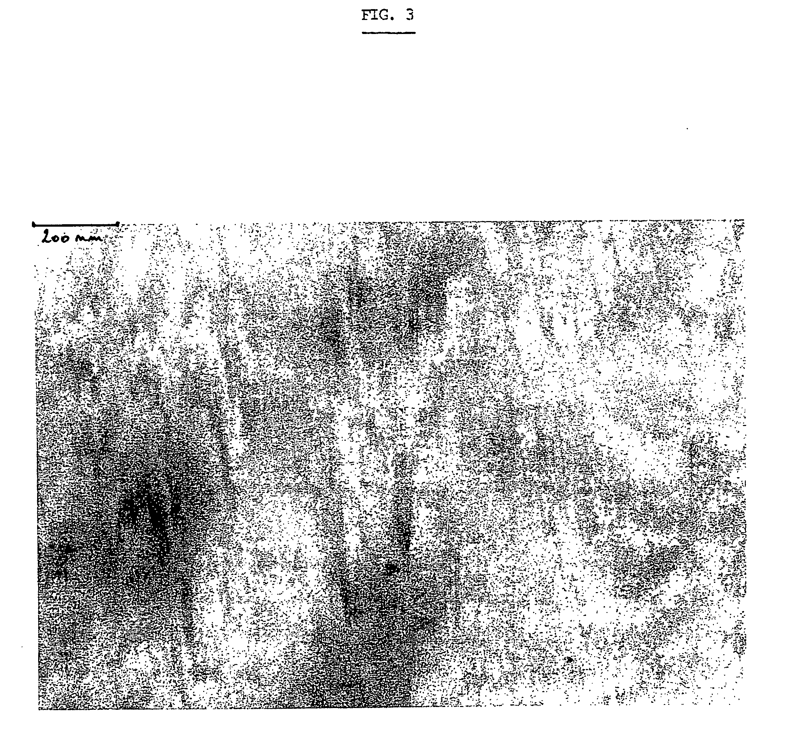

La figure 3 représente la photographie obtenue par microscopie électronique par transmission. On peut y voir des agrégats ioniques présentant une forme analogue à celle d'une grappe de raisins dont la taille est de l'ordre de 100 à 200 nm et les raisins ont une dimension de l'ordre de 10 nm.

Des analyses réalisées par microanalyse X au moyen d'un système LINK eXL II attaché au microscope ZEISS EM 910 mettent clairement en évidence la présence de zinc dans les agrégats ioniques, en particulier dans les raisins constituant la grappe.

## Revendications

1. Procédé de préparation de polyoléfines comprenant les étapes de
a) greffage de groupes acides sur des polyoléfines au moyen d'un monomère greffable porteur d'au moins un groupe fonctionnel choisi parmi un carbonyle et un anhydride d'acide, éventuellement en présence d'un autre monomère greffable porteur d'une insaturation vinylique et éventuellement d'un ou de plusieurs noyaux aromatiques,
b) épuration consistant à éliminer au moins une partie du monomère greffable porteur d'au moins un groupe fonctionnel choisi parmi un carbonyle et un anhydride d'acide, n'ayant pas réagi avec les polyoléfines
c) neutralisation des groupes acides par au moins un agent neutralisant englobant une partie cationique comprenant un ou plusieurs cations choisis parmi le groupe constitué des cations alcalino-terreux et des métaux de transition.

2. Procédé selon la revendication 1, **caractérisé en ce que** l'étape d'épuration b) est effectuée par entraînement à l'acétone, par stripping à l'air chaud, par stripping à la vapeur d'eau, par stripping avec un gaz inerte ou par dégazage.

3. Procédé selon l'une quelconque des revendications précédentes, **caractérisé en ce que** les polyoléfines sont choisies parmi les polymères du propylène et les polymères de l'éthylène.

4. Procédé selon l'une quelconque des revendications précédentes, **caractérisé en ce que** le monomère greffable porteur d'au moins un groupe fonctionnel choisi parmi un carbonyle et un anhydride d'acide est l'anhydride maléique.

5. Procédé selon l'une quelconque des revendications précédentes, **caractérisé en ce que** le monomère greffable porteur d'au moins un groupe fonctionnel choisi parmi un carbonyle et un anhydride d'acide est ajouté en une quantité de 0,01 à 10 % en poids par rapport aux polyoléfines.

6. Procédé selon l'une quelconque des revendications précédentes, **caractérisé en ce qu'**il est effectué en absence de monomère greffable porteur d'une insaturation vinylique et éventuellement d'un ou de plusieurs noyaux aromatiques.

7. Procédé selon l'une quelconque des revendications précédentes, **caractérisé en ce que** le greffage de groupes acides est réalisé en présence d'un générateur de radicaux.

8. Procédé selon l'une quelconque des revendications précédentes, **caractérisé en ce que** l'agent neutralisant englobe une partie cationique comprenant un ou plusieurs cations choisis parmi le Zn²⁺, l'Al³⁺ et le Zr⁴⁺.

9. Procédé selon l'une quelconque des revendications précédentes, **caractérisé en ce que** l'agent neutralisant englobe une partie anionique comprenant un ou plusieurs anions choisis parmi le groupe constitué des alcoolates, des carboxylates, des hydroxydes, des oxydes, des alkyles, des carbonates et des hydrogénocarbonates.

10. Procédé selon la revendication 8 ou 9, **caractérisé en ce que** l'agent neutralisant est l'acétate de zinc.

11. Procédé selon l'une quelconque des revendications précédentes, **caractérisé en ce que** l'agent neutralisant est ajouté en une quantité de 0,1 à 1000 méq/kg de polyoléfines greffées de groupes acides.

12. Procédé selon l'une quelconque des revendications précédentes, **caractérisé en ce que** l'étape c) est suivie d'une étape d'épuration d) consistant à éliminer les produits de la réaction de neutralisation des fonctions acides greffées.

13. Procédé selon la revendication 12, **caractérisé en ce que** l'étape d'épuration d) est effectuée par stripping à la vapeur d'eau, par stripping à l'air chaud ou par dégazage.

14. Procédé selon l'une quelconque des revendications précédentes, **caractérisé en ce que** les étapes a) et c) sont réalisées dans une extrudeuse.

15. Procédé selon la revendication 14, **caractérisé en ce que** l'extrudeuse est constituée d'un alliage résistant à la corrosion.

16. Procédé selon l'une quelconque des revendications précédentes, **caractérisé en ce que** toutes les étapes sont réalisées selon un procédé en continu comportant une seule mise à fusion des polyoléfines.

17. Procédé selon l'une quelconque des revendications précédentes, **caractérisé en ce qu'**un ou plusieurs additifs sont ajoutés pendant le procédé.

18. Procédé selon l'une quelconque des revendications précédentes, **caractérisé en ce qu'**au moins un stabilisant est ajouté pendant le procédé.

19. Procédé selon la revendication 18, **caractérisé en ce que** le stabilisant est choisi parmi les composés comprenant un groupement phénol stériquement encombré, parmi les composés phosphorés et parmi leurs mélanges.

20. Procédé selon la revendication 19, **caractérisé en ce que** le stabilisant est un mélange de pentaérythrityle tétrakis-(3,5-di-t-butyl-4-hydroxyphénylpropionate) et de tris-(2,4-di-t-butylphényl)phosphite.

21. Procédé selon la revendication 19, **caractérisé en ce que** le stabilisant est le 1,3,5-triméthyl-2,4,6-tris(3,5-t-butyl-4-hydroxybenzyl)benzène.

22. Polyoléfines comportant des groupes acides partiellement neutralisés par au moins un agent neutralisant englobant une partie cationique comprenant un ou plusieurs cations choisis parmi le groupe constitué des cations alcalino-terreux et des métaux de transition, présentant un indice de fluidité en fondu, mesuré à 230°C sous un poids de 2,16 kg pour les polymères du propylène selon la norme ASTM D 1238 et à 190°C sous un poids de 5 kg pour les polymères de l'éthylène selon la norme ISO 1133, de 0,001 à 1000 dg/min et une tenue en fondu améliorée **caractérisée par** une augmentation exponentielle de la viscosité élongationnelle en fonction du temps et par une augmentation de la viscosité dynamique aux basses fréquences de cisaillement.

23. Polyoléfines selon la revendication 22 **caractérisées par** des agrégats ioniques présentant une forme analogue à celle d'une grappe de raisins dont la taille est comprise entre 10 et 500 nm et dont les raisins ont une dimension inférieure à 50 nm.

24. Utilisation de polyoléfines selon l'une quelconque des revendications 22 et 23 ou obtenues par un procédé selon l'une quelconque des revendications 1 à 21, pour l'obtention d'objets façonnés par extrusion moussage, thermoformage ou soufflage.

25. Utilisation de polyoléfines selon l'une quelconque des revendications 22 et 23 ou obtenues par un procédé selon l'une quelconque des revendications 1 à 21, dans des applications de compatibilisation, de scellage et multicouches.

26. Procédé d'extrusion moussage, **caractérisé en ce que** l'extrusion moussage est réalisée de manière consécutive au procédé de préparation des polyoléfines selon les revendications 1 à 21.

27. Procédé selon la revendication 1, **caractérisé en ce que** les polyoléfines sont des homopolymères de l'éthylène.

28. Procédé selon la revendication 1, **caractérisé en ce que** les polyoléfines sont des homopolymères du propylène.

29. Procédé selon la revendication 1, **caractérisé en ce que** les polyoléfines sont des copolymères de l'éthylène avec un ou plusieurs comonomère(s) choisi(s) parmi les oléfines linéaires contenant de 2 à 8 atomes de carbone.

30. Procédé selon la revendication 1, **caractérisé en ce que** les polyoléfines sont des copolymères du propylène avec un ou plusieurs comonomère(s) choisi(s) parmi les oléfines linéaires contenant de 2 à 8 atomes de carbone.

31. Polyoléfines selon la revendication 22, **caractérisé en ce que** les polyoléfines sont des homopolymères de l'éthylène.

32. Polyoléfines selon la revendication 22, **caractérisé en ce que** les polyoléfines sont des homopolymères du propylène.

33. Polyoléfines selon la revendication 22, **caractérisé en ce que** les polyoléfines sont des copolymères de l'éthylène avec un ou plusieurs comonomère(s) choisi(s) parmi les oléfines linéaires contenant de 2 à 8 atomes de carbone.

34. Polyoléfines selon la revendication 22, **caractérisé en ce que** les polyoléfines sont des copolymères du propylène avec un ou plusieurs comonomère(s) choisi(s) parmi les oléfines linéaires contenant de 2 à 8 atomes de carbone.

## Patentansprüche

1. Verfahren zur Herstellung von Polyolefinen, umfassend die Schritte
a) Pfropfen von Säuregruppen auf Polyolefine mittels eines pfropfbaren Monomers, welches wenigstens eine funktionelle Gruppe aufweist, welche Gruppe unter einem Carbonyl und einem Säureanhydrid ausgewählt ist, gegebenenfalls in Gegenwart eines weiteren pfropfbaren Monomers, welches eine Vinylunsättigung und gegebenenfalls einen oder mehrere aromatische Kerne aufweist,
b) Reinigung, bestehend aus der Entfernung von wenigstens einem Teil des pfropfbaren Monomers, welches wenigstens eine funktionelle Gruppe trägt, welche Gruppe unter einem Carbonyl und einem Säureanhydrid ausgewählt ist, welcher nicht mit den Polyolefinen reagiert hat,
c) Neutralisation der Säuregruppen mittels wenigstens einem Neutralisierungsmittel, das einen kationischen Anteil beinhaltet, welcher eines oder mehrere Kationen umfaßt, die von der aus Erdalkalikationen und Übergangsmetallen bestehenden Gruppe ausgewählt sind.

2. Verfahren nach Anspruch 1, **dadurch gekennzeichnet, daß** der Schritt der Reinigung b) durch Mitnehmen in Aceton, durch Strippen mit heißer Luft, durch Strippen mit Wasserdampf, durch Strippen mit einem Inertgas oder durch Entgasen erfolgt.

3. Verfahren nach einem der vorstehenden Ansprüche, **dadurch gekennzeichnet, daß** die Polyolefine unter Propylenpolymeren und Ethylenpolymeren ausgewählt sind.

4. Verfahren nach einem der vorstehenden Ansprüche, **dadurch gekennzeichnet, daß** das pfropfbare Monomer, welches wenigstens eine funktionelle Gruppe trägt, die unter einem Carbonyl und einem Säureanhydrid ausgewählt ist, Maleinsäureanhydrid ist.

5. Verfahren nach einem der vorstehenden Ansprüche, **dadurch gekennzeichnet, daß** das pfropfbare Monomer, welches wenigstens eine funktionelle Gruppe trägt, die unter einem Carbonyl und einem Säureanhydrid ausgewählt ist, in einer Menge von 0,01 bis 10 Gew.%, im Verhältnis zu den Polyolefinen, zugesetzt wird.

6. Verfahren nach einem der vorstehenden Ansprüche, **dadurch gekennzeichnet, daß** es in Abwesenheit von pfropfbaren Monomeren durchgeführt wird, welche eine Vinylunsättigung und gegebenenfalls einen oder mehrere aromatische Kerne besitzen.

7. Verfahren nach einem der vorstehenden Ansprüche, **dadurch gekennzeichnet, daß** das Pfropfen der Säuregruppen in Gegenwart eines Radikalbildners durchgeführt wird.

8. Verfahren nach einem der vorstehenden Ansprüche, **dadurch gekennzeichnet, daß** das Neutralisierungsmittel, welches einen kationischen Teil beinhaltet, ein oder mehrere Kationen, welche unter Zn²⁺, Al³⁺ und Zr⁴⁺ ausgewählt sind, umfaßt.

9. Verfahren nach einem der vorstehenden Ansprüche, **dadurch gekennzeichnet, daß** das Neutralisierungsmittel, welches einen anionischen Teil beinhaltet, ein oder mehrere Anionen umfaßt, welche von der Gruppe, bestehend aus Alkoholaten, Carboxylaten, Hydroxiden, Oxiden, Alkylen, Carbonaten und Hydrogencarbonaten ausgewählt sind.

10. Verfahren nach Anspruch 8 oder 9, **dadurch gekennzeichnet, daß** das Neutralisierungsmittel Zinkacetat ist.

11. Verfahren nach einem der vorstehenden Ansprüche, **dadurch gekennzeichnet, daß** das Neutralisierungsmittel in einer Menge von 0,1 bis 1000 mÄqu./kg der mit Säuregruppen gepfropften Polyolefine zugesetzt wird.

12. Verfahren nach einem der vorstehenden Ansprüche, **dadurch gekennzeichnet, daß** der Schritt c) von einem Reinigungsschritt d) gefolgt wird, welcher darin besteht, die Produkte aus der Neutralisationsreaktion mit gepfropften Säurefunktionen zu entfernen.

13. Verfahren nach Anspruch 12, **dadurch gekennzeichnet, daß** der Reinigungsschritt d) durch Strippen mit Wasserdampf, durch Strippen mit Heißluft oder durch Entgasen erfolgt.

14. Verfahren nach einem der vorstehenden Ansprüche, **dadurch gekennzeichnet, daß** die Schritte a) und c) in einem Extruder durchgeführt werden.

15. Verfahren nach Anspruch 14, **dadurch gekennzeichnet, daß** der Extruder aus einer korrosionsbeständigen Legierung gebildet wird.

16. Verfahren nach einem der vorstehenden Ansprüche, **dadurch gekennzeichnet, daß** alle Schritte nach einem kontinuierlichen Verfahren durchgeführt werden, welches ein einmaliges Schmelzen der Polyolefine umfaßt.

17. Verfahren nach einem der vorstehenden Ansprüche, **dadurch gekennzeichnet, daß** eines oder mehrere Additive während des Verfahrens zugesetzt werden.

18. Verfahren nach einem der vorstehenden Ansprüche, **dadurch gekennzeichnet, daß** wenigstens ein Stabilisierungsmittel während des Verfahrens zugesetzt wird.

19. Verfahren nach Anspruch 18, **dadurch gekennzeichnet, daß** das Stabilisierungsmittel unter Verbindungen, welche eine sterisch gehinderte Phenolgruppe umfassen, unter Phosphorzusammensetzungen und deren Mischungen ausgewählt ist.

20. Verfahren nach Anspruch 19, **dadurch gekennzeichnet, daß** das Stabilisierungsmittel ein Gemisch aus Pentaerythrityl-tetrakis-(3,5-di-t-butyl-4-hydroxyphenylpropionat) und Tris-(2,4-di-t-butylphenyl)phosphit ist.

21. Verfahren nach Anspruch 19, **dadurch gekennzeichnet, daß** das Stabilisierungsmittel 1,3,5-Trimethyl-2,4,6-tris(3,5-t-butyl-4-hydroxybenzyl)benzol ist.

22. Polyolefine, welche Säuregruppen tragen, die teilweise neutralisiert sind durch wenigstens ein Neutralisierungsmittel, welches einen kationischen Anteil beinhaltet, der ein oder mehrere Kationen umfaßt, welche von der Gruppe bestehend aus Erdalkali- und Übergangsmetallkationen ausgewählt sind, die einen Schmelzfließindex, gemessen bei 230 °C unter einem Gewicht von 2,16 kg für die Propylenpolymeren nach der Norm ASTMD 1238 und bei 190 °C unter einem Gewicht von 5 kg für die Ethylenpolymeren nach der Norm ISO 1133 von 0,001 bis 1000 dg/min, und ein verbessertes Schmelzverhalten aufweisen, **gekennzeichnet durch** einen exponentiellen Anstieg der Verlängerungszähigkeit als Funktion der Zeit und **durch** einen Anstieg der dynamischen Viskosität bei niedrigen Scherfrequenzen.

23. Polyolefine nach Anspruch 22, **gekennzeichnet durch** ionische Aggregate, welche eine Form analog zu jener von Weintrauben besitzen, deren Größe von 10 bis 500 nm beträgt und wobei die Trauben eine Dimension unter 50 nm aufweisen.

24. Verwendung der Polyolefine nach einem der Ansprüche 22 und 23 oder erhalten nach einem Verfahren nach einem der Ansprüche 1 bis 21 zur Herstellung von durch Schmelzextrusion, Warmformen und Blasen geformten Gegenständen.

25. Verwendung der Olefine nach einem der Ansprüche 22 und 23 oder erhalten nach einem Verfahren nach einem der Ansprüche 1 bis 21 in Anwendungen zur Kombatibilisation, zum Versiegeln und in Mehrlagenanwendungen.

26. Verfahren der Schäumungsextrusion, **dadurch gekennzeichnet, daß** die Schäumungsextrusion nach dem Verfahren der Herstellung der Polyolefine nach den Ansprüchen 1 bis 21 erfolgt.

27. Verfahren nach Anspruch 1, **dadurch gekennzeichnet, daß** die Polyolefine Ethylenhomopolymere sind.

28. Verfahren nach Anspruch 1, **dadurch gekennzeichnet, daß** die Polyolefine Propylenhomopolymere sind.

29. Verfahren nach Anspruch 1, **dadurch gekennzeichnet, daß** die Polyolefine Copolymere von Ethylen mit einem oder mehreren Comonomeren sind, welche unter linearen Olefinen mit 2 bis 8 Kohlenstoffatomen ausgewählt sind.

30. Verfahren nach Anspruch 1, **dadurch gekennzeichnet, daß** die Polyolefine Copolymere von Propylen mit einem oder mit mehreren Comonomeren sind, welche unter linearen Olefinen mit 2 bis 8 Kohlenstoffatomen ausgewählt sind.

31. Polyolefine nach Anspruch 22, **dadurch gekennzeichnet, daß** die Polyolefine Ethylenhomopolymere sind.

32. Polyolefine nach Anspruch 22, **dadurch gekennzeichnet, daß** die Polyolefine Propylenhomopolymere sind.

33. Polyolefine nach Anspruch 22, **dadurch gekennzeichnet, daß** die Polyolefine Copolymere von Ethylen mit einem oder mehreren Comonomeren sind, welche unter linearen Olefinen mit 2 bis 8 Kohlenstoffatomen ausgewählt sind.

34. Polyolefine nach Anspruch 22, **dadurch gekennzeichnet, daß** die Polyolefine Copolymere von Propylen mit einem oder mit mehreren Comonomeren sind, welche unter linearen Olefinen mit 2 bis 8 Kohlenstoffatomen ausgewählt sind.

## Claims

1. Process for producing polyolefins, comprising the following steps :
a) grafting of acid groups onto polyolefins by means of a graftable monomer bearing at least one functional group chosen from a carbonyl and an acid anhydride, optionally in the presence of another graftable monomer bearing a vinyl unsaturated group and, optionally, one or more aromatic rings;
b) purification, consisting in removing at least some of the graftable monomer bearing at least one functional group chosen from a carbonyl and an acid anhydride that has not reacted with the polyolefins;
c) neutralization of the acid groups by at least one neutralizing agent including a cationic part comprising one or more cations chosen from the group consisting of alkaline-earth and transition metal cations.

2. Process according to Claim 1, **characterized in that** purification step b) is carried out by removal using acetone, by hot-air stripping, by steam stripping, by stripping with an inert gas or by venting.

3. Process according to either of the preceding claims, **characterized in that** the polyolefins are chosen from propylene polymers and ethylene polymers.

4. Process according to any one of the preceding claims, **characterized in that** the graftable monomer bearing at least one functional group chosen from a carbonyl and an acid anhydride is maleic anhydride.

5. Process according to any one of the preceding claims, **characterized in that** the graftable monomer bearing at least one functional group chosen from a carbonyl and an acid anhydride is added in an amount of 0.01 to 10% by weight with respect to the polyolefins.

6. Process according to any one of the preceding claims, **characterized in that** it is carried out in the absence of any graftable monomer bearing a vinyl unsaturated group and, optionally, one or more aromatic rings.

7. Process according to any one of the preceding claims, **characterized in that** the grafting of acid groups is carried out in the presence of a radical generator.

8. Process according to any one of the preceding claims, **characterized in that** the neutralizing agent includes a cationic part comprising one or more cations chosen from Zn²⁺, Al³⁺ and Zr⁴⁺.

9. Process according to any one of the preceding claims, **characterized in that** the neutralizing agent includes an anionic part comprising one or more anions chosen from the group consisting of alcoholates, carboxylates, hydroxides, oxides, alkyls, carbonates and hydrogencarbonates.

10. Process according to Claim 8 or 9, **characterized in that** the neutralizing agent is zinc acetate.

11. Process according to any one of the preceding claims, **characterized in that** the neutralizing agent is added in an amount of 0.1 to 1000 meq/kg of polyolefins grafted with acid groups.

12. Process according to any one of the preceding claims, **characterized in that** step c) is followed by a purification step d) consisting in removing the products arising from the reaction of neutralizing the grafted acid functional groups.

13. Process according to Claim 12, **characterized in that** purification step d) is carried out by steam stripping, by hot-air stripping or by venting.

14. Process according to any one of the preceding claims, **characterized in that** steps a) and c) are carried out in an extruder.

15. Process according to Claim 14, **characterized in that** the extruder is made of a corrosion-resistant alloy.

16. Process according to any one of the preceding claims, **characterized in that** all the steps are carried out in a continuous process comprising a single step for melting the polyolefins.

17. Process according to any one of the preceding claims, **characterized in that** one or more additives are added during the process.

18. Process according to any one of the preceding claims, **characterized in that** at least one stabilizer is added during the process.

19. Process according to Claim 18, **characterized in that** the stabilizer is chosen from the compounds comprising a sterically hindered phenol group, from phosphorus compounds and from mixtures thereof.

20. Process according to Claim 19, **characterized in that** the stabilizer is a mixture of pentaerythrityl tetrakis(3,5-di-*tert*-butyl-4-hydroxyphenylpropionate) and tris(2,4-di-*tert*-butylphenyl)phosphite.

21. Process according to Claim 19, **characterized in that** the stabilizer is 1,3,5-trimethyl-2,4,6-tris(3,5-*tert*-butyl-4-hydroxybenzyl)benzene.

22. Polyolefins containing partially neutralized acid groups by at least one neutralizing agent including a cationic part comprising one or more cations chosen from the group consisting of alkaline-earth and transition metal cations, having a melt flow index, measured at 230°C under a load of 2.16 kg for the propylene polymers according to the ASTM D 1238 Standard and at 190°C under a load of 5 kg for the ethylene polymers according to the ISO 1133 Standard, of 0.001 to 1000 dg/min. and an improved melt strength **characterized by** an exponential increase in the elongational viscosity as a function of time and by an increase in the dynamic viscosity at low shear frequencies.

23. Polyolefins according to Claim 22, **characterized by** ionic aggregates having a shape similar to that of a bunch of grapes, the size of the "bunch" being between 10 and 500 nm and the size of the "grapes" being less than 50 nm.

24. Use of polyolefins according to either of Claims 22 and 23 or obtained by a process according to any one of Claims 1 to 21, in order to produce objects shaped by extrusion foaming, thermoforming or blow moulding.

25. Use of polyolefins according to either of Claims 22 and 23 or obtained by a process according to any one of Claims 1 to 21, in compatibilization, sealing and multilayer applications.

26. Extrusion foaming process, **characterized in that** the extrusion foaming is carried out consecutively to the polyolefin production process according to Claims 1 to 21.

27. Process according to Claim 1, **characterized in that** the polyolefins are ethylene homopolymers.

28. Process according to Claim 1, **characterized in that** the polyolefins are propylene homopolymers.

29. Process according to Claim 1, **characterized in that** the polyolefins are ethylene copolymers with one or more comonomer(s) chosen from linear olefins containing from 2 to 8 carbon atoms.

30. Process according to Claim 1, **characterized in that** the polyolefins are propylene copolymers with one or more comonomer(s) chosen from linear olefins containing from 2 to 8 carbon atoms.

31. Polyolefins according to Claim 22, **characterized in that** said polyolefins are ethylene homopolymers.

32. Polyolefins according to Claim 22, **characterized in that** said polyolefins are propylene homopolymers.

33. Polyolefins according to Claim 22, **characterized in that** said polyolefins are ethylene copolymers with one or more comonomer(s) chosen from linear olefins containing from 2 to 8 carbon atoms.

34. Polyolefins according to Claim 22, **characterized in that** said polyolefins are propylene copolymers with one or more comonomer(s) chosen from linear olefins containing from 2 to 8 carbon atoms.
